(19) **Europäisches Patentamt / European Patent Office / Office européen des brevets**

(11) **EP 4 567 461 A1**

(12) # DEMANDE DE BREVET EUROPEEN

(43) Date de publication:
**11.06.2025 Bulletin 2025/24**

(21) Numéro de dépôt: **24215194.2**

(22) Date de dépôt: **25.11.2024**

(51) Classification Internationale des Brevets (IPC):
**G01S 7/481** (2006.01)     **G01S 17/04** (2020.01)
**G01S 7/497** (2006.01)

(52) Classification Coopérative des Brevets (CPC):
**G01S 7/497; G01S 7/4813; G01S 17/04**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.12.2023 FR 2313616**

(71) Demandeur: **STMicroelectronics International N.V.**
**1228 Plan-les-Ouates, Geneva (CH)**

(72) Inventeurs:
- **MILANETTO, Charlotte**
  **38000 GRENOBLE (FR)**
- **PREMONT, Christophe**
  **38360 NOYAREY (FR)**

(74) Mandataire: **Cabinet Beaumont**
**4, Place Robert Schuman**
**B.P. 1529**
**38025 Grenoble Cedex 1 (FR)**

(54) **DISPOSITIF DE CAPTURE DE PROXIMITE**

(57)    La présente description concerne un dispositif de capture de proximité (400) comprenant :
- un capteur de proximité (100) comprenant un émetteur de lumière (110) et un détecteur de lumière (120) comportant une première photodiode (121) générant un premier signal ($DN_N$) lorsqu'elle détecte un premier signal lumineux ($S_N$) émis par l'émetteur de lumière et réfléchi par un objet (20), et une deuxième photodiode (122) générant un deuxième signal ($DN_F$) lorsqu'elle détecte un deuxième signal lumineux ($S_F$) émis par l'émetteur de lumière et réfléchi par l'objet ; le capteur de proximité générant un signal de sortie (DN) fonction des premier et deuxième signaux en pondérant l'un des premier et deuxième signaux par un coefficient de pondération ($\alpha$) ; et
- un circuit de commande (410) adapté à recevoir le signal de sortie et à :
- passer d'un premier état (S2), dans lequel le coefficient de pondération a une première valeur ($\alpha1$), à un deuxième état (S3) lorsque le signal de sortie franchit un premier seuil ;
- dans le deuxième état (S3), appliquer au coefficient de pondération une deuxième valeur ($\alpha2$) ; et
- comparer le signal de sortie obtenu en appliquant la deuxième valeur ($\alpha2$) avec un deuxième seuil (TH1) de manière à passer du deuxième état à un troisième état (S4) si le signal de sortie est inférieur au deuxième seuil, ou à passer du deuxième état à un quatrième état (S1) si le signal de sortie est supérieur au deuxième seuil.

**Fig. 4**

EP 4 567 461 A1

**Description**

Domaine technique

La présente description concerne d'une façon générale les dispositifs électroniques, plus particulièrement les dispositifs électroniques comprenant un capteur de proximité, par exemple un capteur de proximité disposé sous un écran d'affichage.

Technique antérieure

Un capteur de proximité comprend généralement un émetteur de lumière, et un détecteur de lumière. Le principe général d'un capteur de proximité est que l'émetteur émet un faisceau lumineux, par exemple un faisceau infrarouge, qui est réfléchi par un objet et capté en retour par le détecteur. Le détecteur peut comprendre une photodiode, ou plusieurs photodiodes. Le capteur de proximité peut être relié à, ou comprendre, une unité de traitement, configurée pour traiter un signal provenant du détecteur, pour un calcul de détection de proximité. Par exemple, le signal peut avoir une valeur, par exemple une amplitude ou un nombre d'impulsions, qui varie en fonction de la distance séparant l'objet et le détecteur, et l'unité de traitement peut traiter ce signal pour en déduire la présence ou non d'un objet à proximité d'un capteur de proximité.

Le capteur de proximité peut être de type capteur de temps de vol (ToF, time of flight), et dans ce cas, l'unité de traitement peut être configurée pour calculer le temps de parcours entre l'émission du faisceau lumineux et sa réception par le détecteur, la distance entre l'objet et le capteur de proximité pouvant alors être déduite sur la base de ce temps de parcours.

On connaît des dispositifs électroniques comprenant un capteur de proximité disposé sous un écran, par exemple un écran d'affichage. L'écran d'affichage peut être un écran de type à diodes électroluminescentes organiques (OLED, pour "organic light-emitting diode" en anglais). Un capteur de proximité sous l'écran d'affichage d'un smartphone peut permettre de détecter la présence d'un utilisateur contre l'écran, par exemple lorsqu'il colle une oreille sur l'écran pour téléphoner, ce qui peut entraîner l'extinction de l'écran. Le capteur de proximité peut permettre de détecter si l'utilisateur s'éloigne de l'écran afin d'entraîner le rallumage de l'écran.

Il a pu être constaté que, lorsqu'un capteur de proximité est positionné sous un écran à faible transmittance de la lumière, par exemple un écran d'affichage du type OLED, le capteur de proximité pouvait échouer à distinguer si l'objet est à très courte distance (objet très proche), typiquement à quelques millimètres, par exemple à moins de 2 ou 3 millimètres, ou à longue distance (objet éloigné), typiquement à plus de quelques centimètres, par exemple à plus de 20, 30 voire 40 millimètres, dudit capteur. Dans l'exemple de l'utilisateur et du smartphone décrit ci-dessus, cela pourrait compromettre l'extinction de l'écran d'affichage lorsque l'utilisateur est très proche de l'écran et/ou le rallumage de l'écran lorsqu'il s'éloigne de l'écran.

Résumé de l'invention

Il existe un besoin d'un dispositif électronique, comprenant au moins un écran d'affichage et un capteur de proximité sous l'écran d'affichage, plus généralement sous une paroi à faible transmittance de lumière, capable de déterminer si un objet est à très courte ou à longue distance.

Il est également recherché un dispositif de capture de proximité, c'est-à-dire un dispositif comprenant un capteur de proximité, capable de déterminer si un objet est à très courte ou à longue distance avec une solution simple à mettre en œuvre.

Un mode de réalisation pallie tout ou partie des inconvénients des capteurs de proximités connus.

Un mode de réalisation prévoit un dispositif de capture de proximité comprenant :

- un capteur de proximité comprenant un émetteur de lumière et un détecteur de lumière comportant au moins une première photodiode adaptée à générer un premier signal lorsqu'elle détecte un premier signal lumineux émis par l'émetteur de lumière et réfléchi par un objet, et une deuxième photodiode adaptée à générer un deuxième signal lorsqu'elle détecte un deuxième signal lumineux émis par l'émetteur de lumière et réfléchi par l'objet ; le capteur de proximité étant adapté à délivrer un signal de sortie en fonction des premier et deuxième signaux, en pondérant l'un des premier et deuxième signaux par un coefficient de pondération ; et
- un circuit de commande adapté à recevoir le signal de sortie et à :
- passer d'un premier état, dans lequel le coefficient de pondération a une première valeur, à un deuxième état lorsque le signal de sortie franchit un premier seuil ;
- dans le deuxième état, appliquer au coefficient de pondération une deuxième valeur différente de la première valeur ; et

- comparer le signal de sortie obtenu en appliquant la deuxième valeur avec un deuxième seuil de manière à passer du deuxième état à un troisième état si le signal de sortie est inférieur au deuxième seuil, ou à passer du deuxième état à un quatrième état si le signal de sortie est supérieur au deuxième seuil.

Un mode de réalisation prévoit un procédé de traitement d'un signal de sortie délivré par un capteur de proximité comprenant un émetteur de lumière et un détecteur de lumière comportant au moins une première photodiode adaptée à générer un premier signal lorsqu'elle détecte un premier signal lumineux émis par l'émetteur de lumière et réfléchi par un objet, et une deuxième photodiode adaptée à générer un deuxième signal lorsqu'elle détecte un deuxième signal lumineux émis par l'émetteur de lumière et réfléchi par l'objet ; le signal de sortie étant déterminé en fonction des premier et deuxième signaux, en pondérant l'un des premier et deuxième signaux par un coefficient de pondération ;
le procédé comprenant la transmission du signal de sortie à un circuit de commande qui :

- passe d'un premier état, dans lequel le coefficient de pondération a une première valeur, à un deuxième état lorsque le signal de sortie franchit un premier seuil ;
- dans le deuxième état, applique au coefficient de pondération une deuxième valeur différente de la première valeur ; et
- compare le signal de sortie obtenu en appliquant la deuxième valeur avec un deuxième seuil de manière à passer du deuxième état à un troisième état si le signal de sortie est inférieur au deuxième seuil, ou à passer du deuxième état à un quatrième état si le signal de sortie est supérieur au deuxième seuil.

Selon un mode de réalisation, le troisième état correspond à une première distance entre l'objet et le capteur de proximité, et le quatrième état correspond à une deuxième distance entre l'objet et le capteur de proximité, la deuxième distance étant supérieure à la première distance, ou la première distance étant supérieure à la deuxième distance.
Selon un mode de réalisation, le signal de sortie est obtenu en soustrayant l'autre des premier et deuxième signaux au signal pondéré par le coefficient de pondération. En d'autres termes, l'un des premier et deuxième signaux est pondéré par le coefficient de pondération, formant le signal pondéré par le coefficient de pondération, l'autre des premier et deuxième signaux n'est pas pondéré par le coefficient de pondération et est soustrait au signal pondéré par le coefficient de pondération.
Selon un mode de réalisation, le signal de sortie est prétraité par un dispositif de traitement du capteur de proximité, le dispositif de traitement étant relié au circuit de commande.
Selon un mode de réalisation, l'émetteur de lumière et le détecteur de lumière sont positionnés sous une paroi de recouvrement du capteur de proximité.
Selon un mode de réalisation, les première et deuxième photodiodes sont disposées l'une à côté de l'autre, et espacées par une distance, dans une direction sensiblement parallèle au plan de la paroi de recouvrement.
Selon un mode de réalisation, la paroi de recouvrement comporte une première ouverture au droit de l'émetteur de lumière, et une deuxième ouverture au droit du détecteur de lumière, par exemple la deuxième ouverture est centrée avec la première photodiode, la deuxième photodiode étant positionnée sensiblement sous une portion non ouverte de la paroi de recouvrement.
Selon un mode de réalisation, la première photodiode est positionnée entre l'émetteur de lumière et la deuxième photodiode.
Selon un mode de réalisation, le capteur de proximité est sous une paroi susceptible de générer un phénomène de diaphonie par réflexion sur ladite paroi de signaux lumineux émis par l'émetteur de lumière puis transmis vers le détecteur de lumière, par exemple la paroi a un coefficient de transmission de la lumière inférieur à 5% aux longueurs d'onde de travail du capteur de proximité.
Selon un mode de réalisation, le circuit de commande est adapté à générer un signal d'état, le signal d'état comprenant une première valeur dans le troisième état et une deuxième valeur dans le quatrième état.
Selon un mode de réalisation, la paroi est un écran d'affichage, par exemple un écran d'affichage de type OLED, et le signal d'état est adapté à être transmis à l'écran d'affichage, ou un circuit de commande dudit écran d'affichage, de manière à commander son extinction, ou son allumage, selon que le signal d'état prend la première valeur ou la deuxième valeur.
Selon un mode de réalisation, le circuit de commande génère un signal d'état, le signal d'état comprenant une première valeur dans le troisième état et une deuxième valeur dans le quatrième état.
Selon un mode de réalisation, la paroi est un écran d'affichage, par exemple un écran d'affichage de type OLED, et le signal d'état est transmis à l'écran d'affichage, ou un circuit de commande dudit écran d'affichage, de manière à commander son extinction ou son allumage, selon que le signal d'état prend la première valeur ou la deuxième valeur.
Selon un mode de réalisation, la deuxième valeur est sélectionnée de manière à rendre le signal de sortie asymétrique entre une courte distance et une longue distance, pour pouvoir déterminer si l'objet est à une courte ou une longue distance du capteur de proximité.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un capteur de proximité inclus dans un dispositif électronique et positionné sous un écran d'affichage du dispositif électronique et illustre un mode de fonctionnement d'un tel capteur de proximité ;

la figure 2A et la figure 2B illustrent une application d'un capteur de proximité pour éteindre ou allumer un écran d'affichage ;

la figure 3 représente des courbes d'évolution de signaux générés par les photodiodes du capteur de proximité de la figure 1 en fonction de la distance entre le capteur de proximité et un objet, et pour plusieurs nombres d'échantillons de mesure ;

la figure 4 représente un dispositif de capture de proximité selon un mode de réalisation, inclus dans un dispositif électronique et positionné sous un écran d'affichage du dispositif électronique ;

la figure 5A représente un exemple de réalisation du circuit de commande du dispositif de capture de proximité de la figure 4 ;

la figure 5B illustre un exemple de fonctionnement du circuit de commande de la figure 5A ; et

la figure 6 représente une courbe d'évolution du signal de sortie du capteur de proximité de la figure 4, et les différents états du circuit de commande de la figure 5A en fonction de la distance entre le capteur de proximité et un objet.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, tous les composants d'un dispositif électronique intégrant un capteur de proximité sous un écran d'affichage n'ont pas été détaillés, les modes de réalisation décrits étant compatibles avec des dispositifs électroniques usuels comprenant un capteur de proximité sous un écran d'affichage. Similairement, tous les composants d'un capteur de proximité n'ont pas été détaillés, les modes de réalisation décrits étant compatibles avec des capteurs de proximité usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un capteur de proximité dans une position normale d'utilisation.

Sauf précision contraire, les expressions "environ", "approximativement", "sensiblement", et "de l'ordre de" signifient à 10 % près, de préférence à 5 % près.

La transmittance lumineuse, ou coefficient de transmission, d'un élément est définie comme étant la fraction de l'intensité lumineuse traversant cet élément.

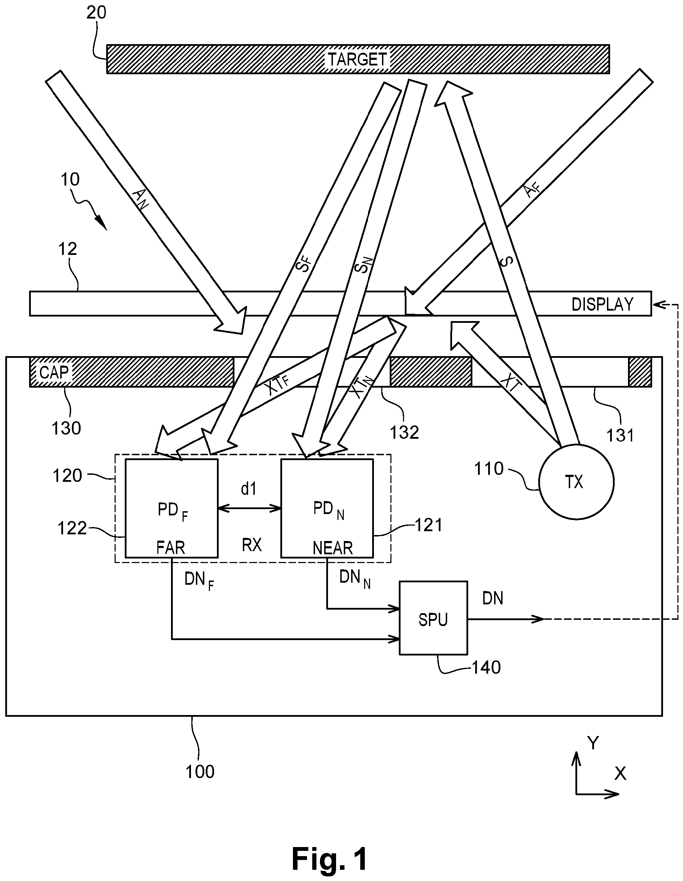

La figure 1 représente un capteur de proximité 100 inclus dans un dispositif électronique 10 et positionné sous un écran d'affichage 12 (DISPLAY) du dispositif électronique, et illustre un mode de fonctionnement d'un tel capteur.

Un capteur de proximité 100 comprend un émetteur de lumière 110 (TX) et un détecteur de lumière 120 (RX) localisés sous une paroi 130 de recouvrement, par exemple un capot (CAP), qui peut correspondre à une paroi supérieure d'un boîtier contenant l'émetteur et le détecteur.

L'émetteur 110 peut comprendre une diode électroluminescente (LED) ou un laser à cavité verticale émettant par la surface (VCSEL, vertical cavity surface emitting laser).

Le détecteur 120 représenté comprend deux photodiodes, une première photodiode 121 ($PD_N$, NEAR) et une deuxième photodiode 122 ($PD_F$, FAR). Les deux photodiodes 121, 122 sont positionnées de telle sorte que la première photodiode 121 est plus proche de l'émetteur 110 que la deuxième photodiode 122. Par exemple, la première photodiode 121 est positionnée entre l'émetteur 110 et la deuxième photodiode 122.

La paroi 130 comporte deux ouvertures 131, 132, une première ouverture 131 au droit de l'émetteur 110 et une deuxième ouverture 132 au droit du détecteur 120, par exemple plus particulièrement centrée avec la première photodiode 121, la deuxième photodiode 122 étant positionnée sensiblement sous une portion non ouverte de la paroi 130.

Les deux photodiodes 121, 122 sont disposées l'une à côté de l'autre, et espacées par une première distance d1, dans une direction X sensiblement parallèle au plan de la paroi 130.

Les photodiodes sont adaptées à détecter un signal lumineux émis par l'émetteur 110, puis réfléchi par un objet 20 (TARGET), et peuvent être des photodiodes pincées ("pinned photodiodes" en anglais), des photodiodes à avalanche (APD, pour "avalanche photodiode" en anglais), ou des photodiodes à avalanche à photon unique (SPAD, pour "single photon avalanche detector" en anglais).

La première photodiode 121 peut être adaptée à détecter plus particulièrement un objet proche, alors que la deuxième photodiode 122 peut être adaptée à détecter plus particulièrement un objet éloigné.

En outre, le dispositif électronique 10 représenté comprend un écran d'affichage 12, le capteur de proximité 100 étant disposé sous cet écran d'affichage. L'écran d'affichage peut être un écran de type à diodes électroluminescentes organiques (OLED, pour "organic light-emitting diode" en anglais). La paroi 130 est positionnée entre l'émetteur/le détecteur et l'écran d'affichage 12, et l'écran d'affichage 12 est positionné entre le capteur de proximité 100 et l'objet 20.

Le capteur de proximité 100 comprend un dispositif de traitement 140 (SPU) configuré pour traiter les signaux générés par le détecteur 120, dans l'exemple représenté les signaux $DN_N$, $DN_F$ des photodiodes 121, 122, pour un calcul de détection de proximité. Le dispositif de traitement 140 est configuré pour traiter les signaux générés par les photodiodes, par exemple en implémentant des opérations sur ces signaux, et délivrer un signal de sortie DN du capteur de proximité 100.

Par exemple, le signal de sortie DN peut avoir une valeur, par exemple une amplitude, un signal digital, par exemple un nombre d'impulsions ou coups ("counts" en anglais), qui varie en fonction de la distance séparant l'objet 20 et le détecteur 120, et le dispositif de traitement 140 peut traiter ce signal, par exemple compter les impulsions, pour en déduire la présence ou non d'un objet à proximité d'un capteur de proximité.

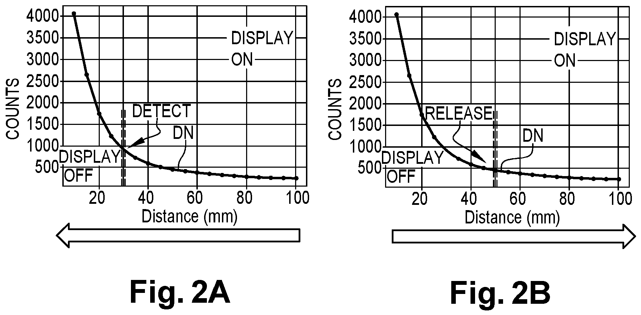

Selon une application illustrée dans les figures 2A et 2B, le signal de sortie DN du capteur de proximité 100 peut être transmis à l'écran d'affichage 12 (DISPLAY), ou à un circuit de contrôle de l'écran d'affichage, afin d'éteindre (DISPLAY OFF) ou allumer (DISPLAY ON) l'écran d'affichage. L'écran d'affichage 12 peut être un écran d'affichage d'un téléphone portable tel qu'un smartphone, et comprendre le capteur de proximité 100 sous l'écran d'affichage 12, et l'objet 20 peut être un organe, par exemple une oreille, d'un utilisateur du téléphone portable.

Dans l'exemple illustré dans les figures 2A et 2B, la valeur du signal de sortie DN croit lorsque l'objet se rapproche du capteur de proximité, c'est-à-dire lorsque la distance entre l'objet et le capteur de proximité diminue (sens de la flèche dans la figure 2A), et la valeur du signal de sortie DN décroit lorsque l'objet s'éloigne du capteur de proximité, c'est-à-dire lorsque la distance entre l'objet et le capteur de proximité augmente (sens de la flèche dans la figure 2B).

Si la valeur du signal de sortie DN passe au-dessus d'un seuil de détection (DETECT) lorsque l'objet se rapproche du capteur de proximité, cela peut déclencher l'extinction de l'écran (DISPLAY OFF), comme illustré en figure 2A. L'écran peut rester éteint tant que la valeur du signal de sortie reste au-dessus d'un seuil de déblocage (RELEASE). Le seuil de déblocage RELEASE est inférieur au seuil de détection DECTECT, comme illustré en figure 2B, pour garantir un hystérésis, et par exemple pour supporter différentes tolérances, telles que des tolérances électrique, optique et/ou mécanique (assemblage du capteur, intégration derrière l'écran). L'écart entre le seuil de détection et le seuil de déblocage peut être défini pour obtenir un fonctionnement stable de type hystérésis. Si la valeur du signal de sortie DN passe en dessous du seuil de déblocage RELEASE lorsque l'objet s'éloigne du capteur de proximité, cela peut déclencher l'allumage de l'écran (DISPLAY ON), comme illustré en figure 2B.

Un mode de fonctionnement du capteur de proximité 100 est expliqué.

En fonctionnement, l'émetteur 110 émet un signal lumineux S au travers de la première ouverture 131 et de l'écran 12. Le signal lumineux peut être réfléchi par un objet 20 et le signal lumineux réfléchi peut être capté en retour par le détecteur 120 au travers de l'écran 12 et de la deuxième ouverture 132. Un premier signal lumineux réfléchi $S_N$ peut être détecté par la première photodiode 121, et un deuxième signal lumineux réfléchi $S_F$ peut être détecté par la première photodiode 122.

En plus des signaux lumineux réfléchis $S_N$, $S_F$, la première photodiode 121 détecte un premier signal $A_N$ provenant de la lumière ambiante (premier signal de lumière ambiante), et la deuxième photodiode 122 détecte un deuxième signal $A_F$ provenant de la lumière ambiante (deuxième signal de lumière ambiante).

De plus, il a été constaté que la présence d'un écran d'affichage de type LED, et plus généralement d'un écran, ou d'une paroi, à faible transmittance de la lumière, typiquement de transmittance inférieure à 5% aux longueurs d'onde de travail du capteur, générait un phénomène de diaphonie, "crosstalk" en anglais, consistant en la transmission de faisceaux lumineux entre l'émetteur et le détecteur par réflexion optique sur l'écran.

Ainsi, la première photodiode 121 peut détecter un premier signal de crosstalk $XT_N$, et la deuxième photodiode 122 peut détecter un deuxième signal de crosstalk $XT_F$.

Le phénomène de diaphonie, ainsi que la lumière ambiante, peuvent avoir pour inconvénient de dégrader les performances du capteur de proximité, en raison d'une composante optique indésirable (bruit) provoquée par des signaux lumineux qui ne sont pas émis par l'objet, en plus de la composante de réflexion optique utile provoquée par la réflexion du signal lumineux émis sur l'objet.

Ainsi, dans l'exemple représenté, le premier signal $DN_N$ de la première photodiode 121 est égal à :

$$DN_N = S_N + A_N + XT_N$$

Et le deuxième signal $DN_F$ de la deuxième photodiode 122 est égal à :

$$DN_F = S_F + A_F + XT_F$$

La composante de lumière ambiante pour chaque photodiode peut être compensée, par exemple dans le dispositif de traitement 140, en acquérant des mesures émetteur éteint, car alors seule la lumière ambiante est détectée, puis des mesures émetteur allumé, et en réalisant une soustraction entre le signal généré émetteur allumé et le signal généré émetteur éteint, pour chaque photodiode. Ceci peut être réalisé en réalisant l'acquisition de plusieurs échantillons de mesure dans chaque configuration (émetteur éteint et émetteur allumé).

Ainsi, si on parvient à supprimer la composante lumière ambiante des signaux, il reste pour la première photodiode 121 :

$$DN_N = S_N + XT_N$$

Et pour la deuxième photodiode 122 :

$$DN_F = S_F + XT_F$$

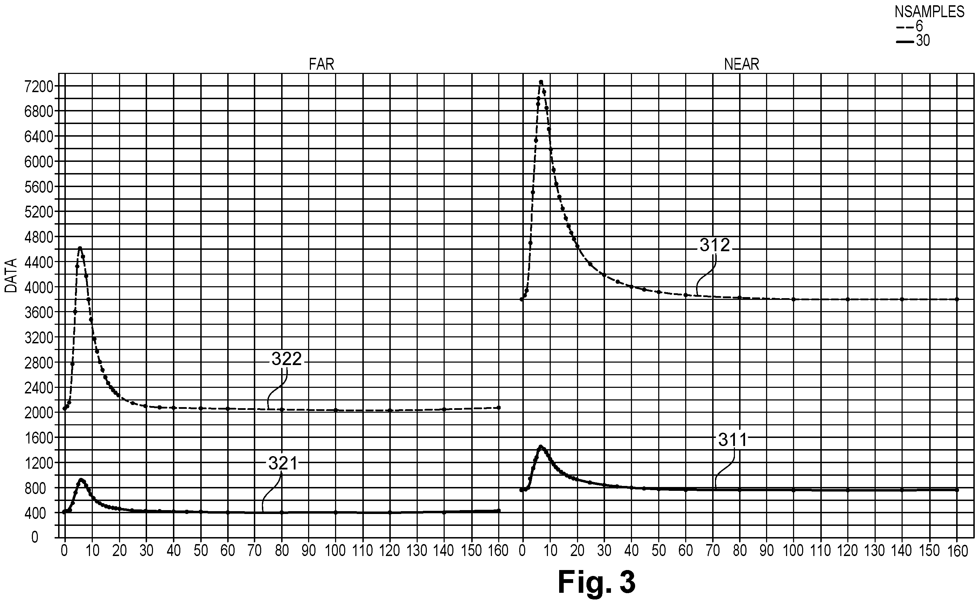

Cependant, il reste la composante de crosstalk, qui peut expliquer que le capteur de proximité 100, par exemple le dispositif de traitement 140, peut, en se basant sur les signaux générés par les photodiodes 121, 122, ne pas distinguer si l'objet est à très courte distance, typiquement à quelques millimètres, ou à longue distance, typiquement à plus de quelques centimètres, comme ceci est illustré dans la figure 3.

La figure 3 représente des courbes d'évolution de signaux générés par les photodiodes du capteur de proximité 100 de la figure 1 en fonction de la distance (en mm) entre le capteur de proximité et un objet, et pour deux quantités différentes d'échantillons de mesure. Les signaux générés sont, par exemple, sous la forme de nombre de coups.

Les courbes de droite 311, 312 correspondent aux signaux générés par la première photodiode 121 (NEAR), tandis que les courbes de gauche 321, 322 correspondent aux signaux générés par la deuxième photodiode 122 (FAR). Les courbes supérieures 312, 322 correspondent à 30 échantillons de mesure, et les courbes inférieures 311, 321 correspondent à 6 échantillons de mesure. On peut constater que le niveau de chaque signal, que ce soit pour la première photodiode 121 ou la deuxième photodiode 122, est sensiblement le même que la distance soit inférieure à 2 ou 3 millimètres (très courte distance) ou supérieure à 30 ou 40 millimètres (longue distance), et que le nombre d'échantillons n'y change rien.

Dans l'exemple d'application décrit en relation avec les figures 2A et 2B, on comprend que ce problème peut compromettre le déclenchement de l'extinction de l'écran alors que l'utilisateur est très proche de, voire collé à, l'écran et/ou le rallumage de l'écran alors que l'utilisateur est loin de l'écran.

Afin de répondre à ce problème, on peut vouloir supprimer ou réduire les composantes de crosstalk dans les signaux, par exemple en traitant différemment le premier signal $DN_N$ généré par la première photodiode 121 et le deuxième signal $DN_F$ généré par la deuxième photodiode 122. Une solution peut être d'appliquer un ratio entre le premier signal $DN_N$ et le deuxième signal $DN_F$, ou entre le deuxième signal $DN_F$ et le premier signal $DN_N$. Une autre solution peut être de pondérer le premier signal $DN_N$ par un coefficient $\alpha$ avant de lui soustraire le deuxième signal $DN_F$, ou de pondérer le deuxième signal $DN_F$ par le coefficient $\alpha$ avant de lui soustraire le premier signal $DN_N$ et de tester plusieurs valeurs du coefficient $\alpha$ pour minimiser les composantes de crosstalk dans les signaux, voire les supprimer.

La deuxième solution peut consister à implémenter, par exemple dans le dispositif de traitement 140 ou dans une unité de compensation dédiée, un algorithme de compensation qui permette de construire l'équation de compensation suivante :

$$DN = \alpha \times (S_N + XT_N) - (S_F + XT_F) = (\alpha - \beta) \times S_N$$

où

$$XT_F = \alpha \times XT_N$$

et

$$S_F = \beta \times S_N$$

Selon la configuration des photodiodes, par exemple dans la configuration de la figure 1, on peut avoir plus de composante de crosstalk sur la photodiode FAR que sur la photodiode NEAR, de sorte que $\alpha$ est supérieur à 1.

En fonction de la configuration des photodiodes et/ou du positionnement de l'objet, voire d'autres paramètres tels que des paramètres d'assemblage du capteur et/ou des caractéristiques de l'émetteur de lumière, il peut y avoir davantage de signal réfléchi détecté sur la photodiode NEAR que sur la photodiode FAR, de sorte que $\beta$ est inférieur à 1, ou inversement il peut y avoir davantage de signal réfléchi détecté sur la photodiode FAR que sur la photodiode NEAR, de sorte que $\beta$ est supérieur à 1.

En jouant sur le coefficient $\alpha$ dans l'équation de compensation, par exemple en appliquant au coefficient $\alpha$ plusieurs valeurs, on peut obtenir un signal de sortie DN avec principalement la composante de réflexion optique utile, c'est-à-dire un signal de sortie DN expurgé des composantes de crosstalk, ou du moins avec des composantes de crosstalk réduites. Par exemple, au moins quatre, voire au moins huit, valeurs du coefficient $\alpha$ sont nécessaires.

Cependant, ces solutions nécessitent de réaliser de nombreux calculs qui nécessitent d'implanter des circuits logiques, qui ont une empreinte surfacique non négligeable sur le dispositif électronique, et qui sont consommateurs d'énergie électrique. De plus, ces solutions peuvent nécessiter d'avoir une distance d1 minimale entre les deux photodiodes afin de garantir un comportement différents des signaux entre les deux photodiodes NEAR et FAR. En effet, plus la différence des comportements des deux photodiodes NEAR et FAR est grande, meilleure la détection est. Par exemple, la distance d1 est supérieure à 0,5 mm, voire supérieure à 1 mm, par exemple égale à environ 1,2 mm, ce qui peut avoir pour conséquence d'augmenter davantage la taille du dispositif électronique.

Les inventeurs proposent un dispositif de capture de proximité, c'est-à-dire un dispositif comprenant un capteur de proximité, qui permette de pallier tout ou partie des inconvénients décrits précédemment, en particulier de répondre au problème de discrimination entre un objet très proche ou un objet éloigné, et ce, de préférence avec une solution simple à mettre en oeuvre, par exemple, une solution qui permette d'éviter d'augmenter la taille du dispositif de capture de proximité et qui soit peu consommatrice d'énergie électrique.

Des modes de réalisation de dispositifs de capture de proximité vont être décrits ci-après. Les modes de réalisation décrits sont non limitatifs et diverses variantes apparaîtront à la personne du métier à partir des indications de la présente description.

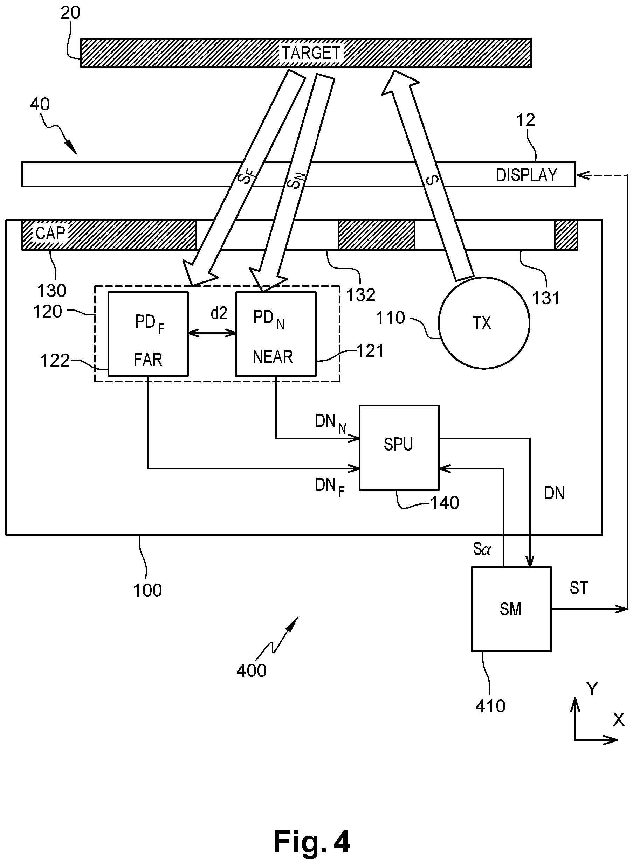

La figure 4 représente un dispositif de capture de proximité 400 selon un mode de réalisation, inclus dans un dispositif électronique 40 et positionné sous une paroi 12 (DISPLAY) du dispositif électronique 40.

Le dispositif de capture de proximité 400 inclut un capteur de proximité qui peut être similaire au capteur de proximité 100 de la figure 1, qui comprend un émetteur de lumière 110 et un détecteur de lumière 120 incluant une première photodiode 121 (NEAR) et une deuxième photodiode 122 (FAR) sous une paroi 130 de recouvrement, tel un capot (CAP). Dans l'exemple représenté, les photodiodes sont disposées l'une à côté de l'autre, et espacées par une deuxième distance d2, dans une direction X sensiblement parallèle au plan de la paroi 130, mais d'autres configurations sont possibles. La paroi 130 comporte deux ouvertures 131, 132, une première ouverture 131 au droit de l'émetteur 110 et une deuxième ouverture 132 au droit du détecteur 120, par exemple plus particulièrement centrée avec la première photodiode 121, la deuxième photodiode 122 étant positionnée sensiblement sous une portion non ouverte de la paroi 130.

Chaque photodiode est adaptée à détecter un signal lumineux S émis par l'émetteur 110, puis réfléchi $S_N$, $S_F$ par un objet 20 (TARGET). En détectant le signal lumineux réfléchi, et généralement des signaux parasites comme décrit plus avant, chaque photodiode est adaptée à générer un signal $DN_N$, $DN_F$.

Le capteur de proximité 100 peut comprendre également, similairement au capteur de proximité de la figure 1, un dispositif de traitement 140 (SPU) configuré pour traiter les signaux générés par le détecteur 120, dans l'exemple représenté les signaux $DN_N$, $DN_F$ générés par les deux photodiodes 121, 122, pour un calcul de détection de proximité. Le dispositif de traitement 140 peut générer un signal de sortie DN, fonction des signaux $DN_N$, $DN_F$.

Le capteur de proximité 100 peut être de type capteur de temps de vol (ToF, time of flight), et dans ce cas, le dispositif de traitement 140 peut être configuré pour calculer le temps de parcours entre l'émission du signal lumineux et sa réception par le détecteur, la distance entre l'objet et le capteur de proximité pouvant alors être déduite sur la base de ce temps de parcours.

Le capteur de proximité 100 peut fonctionner à la lumière infrarouge (IR, "infrared" en anglais) ou proche infrarouge (NIR, "near infrared" en anglais). Par exemple, le capteur de proximité 100 peut fonctionner à des longueurs d'onde dans un spectre non visible, par exemple des longueurs d'ondes supérieures à 850 nm.

La paroi 12 peut être une paroi à faible transmittance de la lumière, plus largement une paroi susceptible de générer un phénomène de diaphonie aux longueurs d'onde de travail du capteur de proximité 100, par réflexion sur ledit écran des signaux lumineux émis par l'émetteur de lumière 110 et transmis vers le détecteur de lumière 120. La paroi 12 peut être un écran d'affichage, par exemple un écran d'affichage de type OLED, un contour d'écran ("bezel" en anglais) qui est une zone sans affichage dans une région de bordure d'un écran d'affichage, ou un verre de protection foncé ("dark cover glass" en anglais).

Le dispositif de capture de proximité 400 comprend en outre un circuit de commande 410 (SM), par exemple implémenté par une machine d'état ("state machine" en anglais), ou par un processeur (CPU, "central processing unit" en anglais).

Le circuit de commande 410 est adapté à recevoir un signal du détecteur 120.

Le circuit de commande 410 peut être relié au détecteur 120 par l'intermédiaire du dispositif de traitement 140, qui peut prétraiter les signaux $DN_N$, $DN_F$ acquis par les deux photodiodes, de sorte que le circuit de commande 410 est adapté à récupérer le signal de sortie DN.

Le signal de sortie DN est de préférence obtenu en pondérant l'un des premier et deuxième signaux par le coefficient de pondération $\alpha$, par exemple en pondérant le premier signal $DN_N$ de la première photodiode 121 par le coefficient $\alpha$ avant de lui soustraire le deuxième signal $DN_F$ de la deuxième photodiode 122, ou de pondérer le deuxième signal $DN_F$ par le coefficient de pondération $\alpha$ avant de lui soustraire le premier signal $DN_N$.

Le circuit de commande peut être du type coprocesseur.

Le circuit de commande 410 a été représenté comme ne faisant pas partie du capteur de proximité 100, mais comme faisant partie du dispositif de capture de proximité 400 et en étant relié au capteur de proximité 100. Ceci n'est pas limitatif et d'autres configurations sont possibles. Selon une variante, le circuit de commande 410 peut être inclus dans le capteur de proximité 100, par exemple dans le dispositif de traitement 140. Selon une autre variante, le circuit de commande 410 peut récupérer les données du capteur de proximité 100 sans être nécessairement relié à ce capteur, et les données récupérées peuvent être post-traitées dans le circuit de commande 410.

A noter que le dispositif de traitement 140 peut être omis dans le capteur de proximité de la figure 3, et les signaux générés par les deux photodiodes peuvent être dirigés directement vers le circuit de commande 410 sans avoir été prétraités.

Le circuit de commande 410 est adapté à :

- passer d'un premier état, dans lequel le coefficient de pondération a une première valeur $\alpha 1$, à un deuxième état lorsque le signal de sortie DN franchit un premier seuil ;
- dans le deuxième état, appliquer au coefficient de pondération une deuxième valeur $\alpha 2$ différente de la première valeur $\alpha 1$ ; et
- comparer le signal de sortie DN obtenu en appliquant la deuxième valeur $\alpha 2$ avec un deuxième seuil.

Par exemple, dans le deuxième état, le circuit de commande 410 envoie au dispositif de traitement 140 un signal de commande $S\alpha$ pour modifier le coefficient $\alpha$, de manière à modifier le signal de sortie DN.

Par exemple, si le signal de sortie DN est inférieur au deuxième seuil, alors le circuit de commande passe du deuxième état à un troisième état, et si le signal de sortie DN est supérieur ou égal au deuxième seuil, alors le circuit de commande passe du deuxième état à un quatrième état.

Le circuit de commande 410 fournit un signal d'état ST qui est fonction du résultat de la comparaison entre le signal de sortie et le deuxième seuil, par exemple selon que le circuit de commande 410 est dans le troisième état ou le quatrième état.

Le signal d'état ST peut être un signal analogique ou numérique, une valeur dans un registre d'état accessible en lecture, ou les deux. Le signal d'état ST peut être aussi une variable dans un programme qui exécute la machine d'état.

Le signal d'état ST peut comprendre une première valeur $ST_N$ correspondant à un objet à une première distance du capteur de proximité, et une deuxième valeur $ST_F$ correspondant à un objet à une deuxième distance du capteur de proximité, la deuxième distance étant supérieure à la première distance. La première distance peut être une très courte distance (objet très proche), typiquement quelques millimètres, par exemple moins de 2 ou 3 millimètres. La deuxième distance peut être une longue distance (objet éloigné), typiquement plus de quelques centimètres, par exemple plus de 20, 30 millimètres, voire plus de 40 millimètres.

Le signal d'état ST peut être transmis à l'écran d'affichage 12, ou un circuit de commande de l'écran d'affichage, par exemple afin de commander son extinction, ou son maintien en mode éteint, si le signal d'état ST prend la première valeur $ST_N$, ou son allumage, ou son maintien en mode allumé, si le signal d'état ST prend la deuxième valeur $ST_F$.

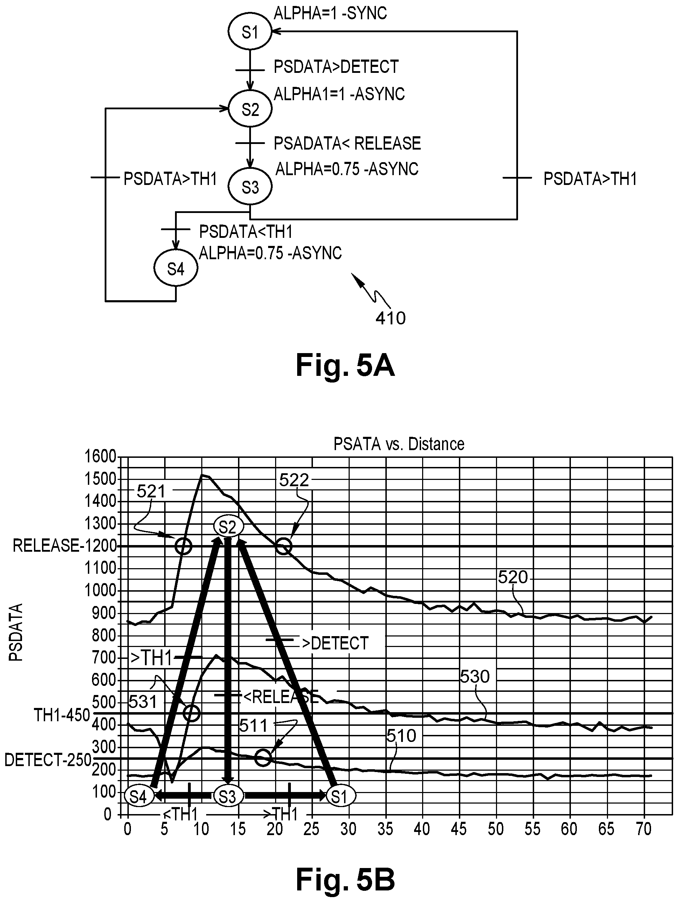

La figure 5A représente un exemple de réalisation du circuit de commande 410 du dispositif de capture de proximité 400 de la figure 4. Le circuit de commande de la figure 5A est implémenté par une machine d'état. La figure 5B illustre un exemple de fonctionnement du circuit de commande 410 de la figure 5A.

L'exemple des figures 5A et 5B est décrit en relation avec l'application des figures 2A et 2B, et peut avoir plusieurs applications liées à la détection de proximité sous un écran ou une paroi à faible transmittance, par exemple dans des produits tels que des smartphone, des ordinateurs, des tablettes, des oreillettes, des casques de réalité virtuelle ...

La machine d'état représentée comprend quatre états et des transitions entre les états :

- un état S1 (quatrième état), dans lequel le coefficient de pondération a une première valeur $\alpha1$, et l'écran est allumé (SYNC) ;
- une transition de l'état S1 à un état S2 (premier état) si le signal de sortie (PSDATA) passe au-dessus du seuil de détection (DETECT),
- dans l'état S2, l'écran est éteint (ASYNC) ;
- une transition de l'état S2 à un état S3 (deuxième état) si le signal de sortie PSDATA passe en dessous du seuil de déblocage (RELEASE) ;
- dans l'état S3, le coefficient de pondération prend une deuxième valeur $\alpha2$ différente de la première valeur ;
- une transition de l'état S3 à un état S4 (troisième état) si le signal de sortie PSDATA est en dessous d'un seuil (TH1) (deuxième seuil), et l'écran est toujours éteint (ASYNC) ;
- une transition de l'état S4 à l'état S2 si le signal de sortie PSDATA repasse au-dessus du seuil TH1;
- une transition de l'état S3 à l'état S1 (quatrième état) si le signal de sortie PSDATA est au-dessus du seuil TH1, et l'écran est rallumé (SYNC).

On a représenté une machine d'état à quatre états, mais la machine d'état pourrait comprendre plus de quatre états.

Lorsque l'écran est allumé, le capteur de proximité peut se synchroniser avec une horloge de l'écran, par exemple pour adapter les instants où l'émetteur de lumière émet le signal lumineux avec l'activité de l'écran. C'est pourquoi on peut parler de mode synchrone (SYNC). Lorsque l'écran est éteint, le capteur de proximité ne peut plus se synchroniser avec l'horloge de l'écran. C'est pourquoi on peut parler de mode asynchrone (ASYNC).

A titre d'exemple non limitatif, la première valeur $\alpha1$ est égale à 1 et la deuxième valeur $\alpha2$ est égale à 0,75, mais d'autres valeurs peuvent convenir.

Dans la figure 5B, on a représenté les états, les transitions et les seuils en lien avec des courbes d'évolution du signal de sortie du capteur de proximité en fonction de la distance entre l'objet et le capteur de proximité (en millimètres). La première courbe 510 correspond à une évolution du signal de sortie PSDATA lorsque le coefficient de pondération a la première valeur $\alpha1$ et que l'écran est allumé (première configuration). La deuxième courbe 520 correspond à une évolution du signal de sortie PSDATA lorsque le coefficient de pondération a la première valeur $\alpha1$ et que l'écran est éteint : dans cette deuxième configuration, le nombre d'échantillons de mesures peut être plus élevé que dans la première configuration, par exemple pour augmenter le ratio signal sur bruit, ce qui explique que le seuil RELEASE se trouve au-dessus du seuil DETECT dans l'exemple représenté. La troisième courbe 530 correspond à une évolution du signal de sortie PSDATA lorsque le coefficient de pondération a la deuxième valeur $\alpha2$ et que l'écran est éteint (troisième configuration).

Dans l'état S1, le signal de sortie du capteur de proximité suit la première courbe 510. On voit que lorsque la distance diminue, dans l'exemple lorsque la distance passe en dessous d'environ 18 mm (point 511), alors le signal de sortie PSDATA dépasse le seuil de détection DETECT. L'écran s'éteint alors, et on passe à l'état S2.

Dans l'état S2, le signal de sortie du capteur de proximité suit la deuxième courbe 520, alors que l'écran est éteint. Partant de l'état S2, on voit qu'on peut passer sous le seuil de déblocage RELEASE soit lorsque la distance diminue (point 521), soit lorsque la distance augmente (point 522) . On est alors passé dans l'état S3 et on suit encore la deuxième courbe 520. En d'autres termes, l'écran pourrait se rallumer comme souhaité alors que la distance entre l'objet et le capteur augmente, mais il pourrait également se rallumer alors que la distance entre l'objet et le capteur diminue encore, ce qui n'est pas souhaité. Ainsi, dans l'état S2 ou dans l'état S3 en suivant la deuxième courbe 520, le signal de sortie du capteur de proximité ne permet pas de savoir si l'objet s'éloigne du capteur ou s'il s'en rapproche.

C'est pourquoi, dans l'état S3, le coefficient de pondération prend une deuxième valeur $\alpha2$ différente de la première valeur, de sorte que le signal de sortie PSDATA est modifié. Cette deuxième valeur $\alpha2$ est de préférence choisie de manière à rendre le signal de sortie dissymétrique entre une courte distance et une longue distance, et pouvoir déterminer si l'objet est à courte ou à longue distance du capteur. Le signal de sortie PSDATA suit alors la troisième courbe 530. Dans l'exemple représenté, si le signal de sortie PSDATA est en dessous du seuil TH1 (sous le point 531), alors on passe dans l'état S4, et l'écran peut rester éteint, et si le signal de sortie PSDATA est au-dessus du seuil TH1, alors on passe dans l'état S1 et l'écran peut être rallumé. Dans l'exemple représenté, le seuil TH1 est compris entre les seuils DETECT et RELEASE, mais ceci n'est pas limitatif. En variante, on pourrait passer dans l'état S1 si le signal de sortie PSDATA était en dessous du seuil TH1, et dans l'état S4 si le signal de sortie PSDATA était au-dessus du seuil TH1.

On voit donc avec cet exemple de réalisation que les modes de réalisation permettent de répondre au problème de discrimination entre un objet très proche ou un objet éloigné, avec une solution simple à mettre en oeuvre, par exemple une machine d'état avec quatre états, trois seuils (deux pourraient suffire si on part de l'état S2), et deux valeurs d'un coefficient de pondération, et de préférence avec un déplacement de l'objet ou du capteur de proximité. Une telle solution peut permette de répondre à une contrainte de limitation de taille d'un dispositif de capture de proximité, et de limitation de la consommation d'énergie électrique.

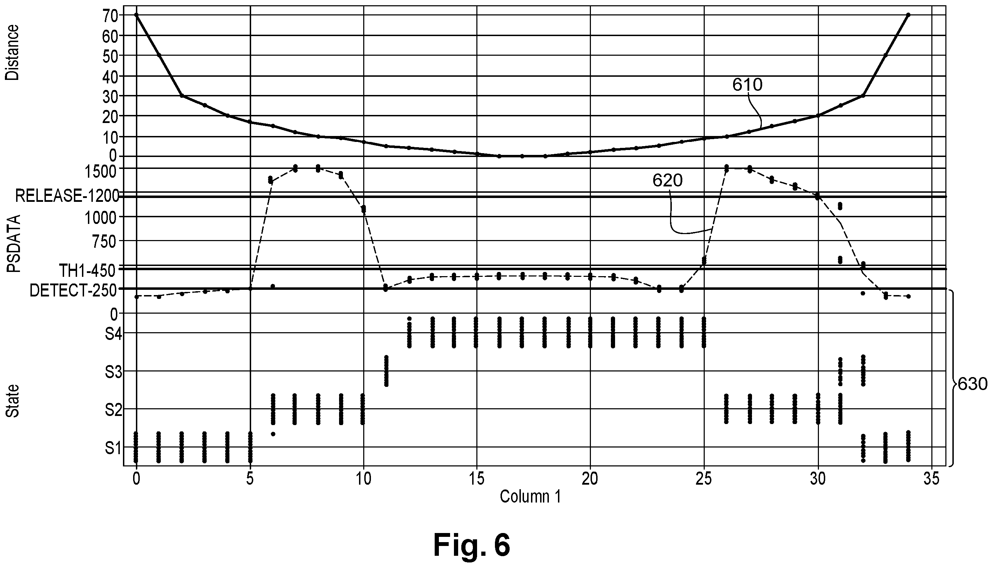

La figure 6 représente une courbe d'évolution du signal de sortie du capteur de proximité 100 de la figure 4, et les différents états du circuit de commande 410 de la figure 5A en fonction de la distance entre le capteur de proximité et un objet.

La courbe 610 dans la partie supérieure de la figure 6 représente la distance entre l'objet et le capteur de proximité (Distance). La courbe 620 dans la partie intermédiaire de la figure 6 représente la courbe d'évolution du signal de sortie (PSDATA) du capteur de proximité 100. Les traits 630 dans la partie inférieure de la figure 6 représentent les différents états (state) du circuit de commande 410. Ces traits correspondent à plusieurs valeurs de chaque état S1-S4, ce qui explique la forme en trait et non en point unique.

La figure 6 montre que, lorsque le signal de sortie PSDATA est en dessous du seuil de détection DETECT, le circuit de commande est dans le quatrième état S1, puis lorsque le signal de sortie PSDATA passe au-dessus du seuil de détection DETECT, le circuit de commande passe dans le premier état S2. Dans l'exemple représenté, le signal de sortie PSDATA passe également au-dessus du seuil de déblocage RELEASE. Ensuite, lorsque le signal de sortie PSDATA passe en dessous du seuil de déblocage RELEASE, le circuit de commande passe dans le deuxième état S3, dans lequel le coefficient de pondération passe de la première valeur $\alpha1$ à la deuxième valeur $\alpha2$. Le circuit de commande compare alors le signal de sortie généré avec le seuil TH1. Si le signal de sortie PSDATA est en dessous du seuil TH1, alors le circuit de commande passe du deuxième état S3 au troisième état S4. Bien que non représenté, partant de S3, si le signal de sortie PSDATA passe au-dessus du seuil TH1, alors le circuit de commande passe dans le quatrième état S1. Si, partant de S4, le signal de sortie PSDATA repasse au-dessus du seuil TH1, alors le circuit de commande passe dans le premier état S2.

Les modes de réalisation permettent que la deuxième distance d2 entre les photodiodes de la figure 4 soit réduite par rapport à la première distance d1 entre les photodiodes de la figure 1, par exemple la distance d2 peut être inférieure à 500 $\mu$m, par exemple égale à environ 250 $\mu$m.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Dispositif de capture de proximité (400) comprenant :

    - un capteur de proximité (100) comprenant un émetteur de lumière (110) et un détecteur de lumière (120) comportant au moins une première photodiode (121) adaptée à générer un premier signal ($DN_N$) lorsqu'elle détecte un premier signal lumineux ($S_N$) émis par l'émetteur de lumière et réfléchi par un objet (20), et une deuxième photodiode (122) adaptée à générer un deuxième signal ($DN_F$) lorsqu'elle détecte un deuxième signal lumineux ($S_F$) émis par l'émetteur de lumière et réfléchi par l'objet ; le capteur de proximité étant adapté à délivrer un signal de sortie (DN) en fonction des premier et deuxième signaux, en pondérant l'un des premier et deuxième signaux par un coefficient de pondération ($\alpha$) ; et
    - un circuit de commande (410) adapté à recevoir le signal de sortie (DN) et à :

        - passer d'un premier état (S2), dans lequel le coefficient de pondération a une première valeur ($\alpha1$), à un deuxième état (S3) lorsque le signal de sortie franchit un premier seuil (RELEASE) ;
        - dans le deuxième état (S3), appliquer au coefficient de pondération une deuxième valeur ($\alpha2$) différente de la première valeur ; et
        - comparer le signal de sortie obtenu en appliquant la deuxième valeur ($\alpha2$) avec un deuxième seuil (TH1) de manière à passer du deuxième état à un troisième état (S4) si le signal de sortie est inférieur au deuxième seuil, ou à passer du deuxième état à un quatrième état (S1) si le signal de sortie est supérieur au deuxième seuil.

2. Procédé de traitement d'un signal de sortie (DN) délivré par un capteur de proximité (100) comprenant un émetteur de lumière (110) et un détecteur de lumière (120) comportant au moins une première photodiode (121) adaptée à générer un premier signal ($DN_N$) lorsqu'elle détecte un premier signal lumineux ($S_N$) émis par l'émetteur de lumière et réfléchi par un objet (20), et une deuxième photodiode (122) adaptée à générer un deuxième signal ($DN_F$) lorsqu'elle détecte un deuxième signal lumineux ($S_F$) émis par l'émetteur de lumière et réfléchi par l'objet ; le signal de sortie (DN) étant déterminé en fonction des premier et deuxième signaux, en pondérant l'un des premier et deuxième signaux par un coefficient de pondération ($\alpha$) ;

le procédé comprenant la transmission du signal de sortie (DN) à un circuit de commande (410) qui :

- passe d'un premier état (S2), dans lequel le coefficient de pondération a une première valeur ($\alpha 1$), à un deuxième état (S3) lorsque le signal de sortie franchit un premier seuil (RELEASE) ;
- dans le deuxième état (S3), applique au coefficient de pondération une deuxième valeur ($\alpha 2$) différente de la première valeur ; et
- compare le signal de sortie obtenu en appliquant la deuxième valeur ($\alpha 2$) avec un deuxième seuil (TH1) de manière à passer du deuxième état à un troisième état (S4) si le signal de sortie est inférieur au deuxième seuil, ou à passer du deuxième état à un quatrième état (S1) si le signal de sortie est supérieur au deuxième seuil.

3. Dispositif selon la revendication 1, ou procédé selon la revendication 2, dans lequel le troisième état (S4) correspond à une première distance entre l'objet et le capteur de proximité (100), et le quatrième état (S1) correspond à une deuxième distance entre l'objet et le capteur de proximité, la deuxième distance étant supérieure à la première distance.

4. Dispositif selon la revendication 1 ou 3, ou procédé selon la revendication 2 ou 3, dans lequel le signal de sortie (DN) est obtenu en soustrayant l'autre des premier et deuxième signaux au signal pondéré par le coefficient de pondération ($\alpha$).

5. Dispositif selon l'une quelconque des revendications 1, 3, 4, ou procédé selon l'une quelconque des revendications 2 à 4, dans lequel le signal de sortie (DN) est prétraité par un dispositif de traitement (140) du capteur de proximité (100), le dispositif de traitement étant relié au circuit de commande (410).

6. Dispositif selon l'une quelconque des revendications 1, 3 à 5, ou procédé selon l'une quelconque des revendications 2 à 5, dans lequel l'émetteur de lumière (110) et le détecteur de lumière (120) sont positionnés sous une paroi de recouvrement (130) du capteur de proximité (100).

7. Dispositif selon la revendication 6, ou procédé selon la revendication 6, dans lequel les première et deuxième photodiodes sont disposées l'une à côté de l'autre, et espacées par une distance (d2), dans une direction (X) sensiblement parallèle au plan de la paroi de recouvrement (130) .

8. Dispositif selon la revendication 6 ou 7, ou procédé selon la revendication 6 ou 7, dans lequel la paroi de recouvrement (130) comporte une première ouverture (131) au droit de l'émetteur de lumière (110), et une deuxième ouverture (132) au droit du détecteur de lumière (120), par exemple la deuxième ouverture est centrée avec la première photodiode (121), la deuxième photodiode (122) étant positionnée sensiblement sous une portion non ouverte de la paroi de recouvrement.

9. Dispositif selon l'une quelconque des revendications 1, 3 à 8, ou procédé selon l'une quelconque des revendications 2 à 8, dans lequel la première photodiode (121) est positionnée entre l'émetteur (110) et la deuxième photodiode (122).

10. Dispositif selon l'une quelconque des revendications 1, 3 à 9, ou procédé selon l'une quelconque des revendications 2 à 9, dans lequel le capteur de proximité (100) est sous une paroi (12) susceptible de générer un phénomène de diaphonie par réflexion sur ladite paroi de signaux lumineux émis par l'émetteur de lumière (110) puis transmis vers le détecteur de lumière (120), par exemple la paroi a un coefficient de transmission de la lumière inférieur à 5% aux longueurs d'onde de travail du capteur de proximité (100).

11. Dispositif selon l'une quelconque des revendications 1, 3 à 10, dans lequel le circuit de commande (410) est adapté à générer un signal d'état (ST), le signal d'état comprenant une première valeur ($ST_N$) dans le troisième état (S4) et une deuxième valeur ($ST_F$) dans le quatrième état (S1) .

12. Dispositif selon la revendication 11 en combinaison avec la revendication 10, dans lequel la paroi est un écran d'affichage, par exemple un écran d'affichage de type OLED, et le signal d'état (ST) est adapté à être transmis à l'écran d'affichage (12), ou un circuit de commande dudit écran d'affichage, de manière à commander son extinction ou son allumage, selon que le signal d'état prend la première valeur ou la deuxième valeur.

13. Procédé selon l'une quelconque des revendications 2 à 10, dans lequel le circuit de commande (410) génère un signal d'état (ST), le signal d'état comprenant une première valeur ($ST_N$) dans le troisième état (S4) et une deuxième valeur ($ST_F$) dans le quatrième état (S1).

14. Procédé selon la revendication 13 en combinaison avec la revendication 10, dans lequel la paroi est un écran d'affichage, par exemple un écran d'affichage de type OLED, et le signal d'état (ST) est transmis à l'écran d'affichage (12), ou un circuit de commande dudit écran d'affichage, de manière à commander son extinction, ou son allumage, selon que le signal d'état prend la première valeur ou la deuxième valeur.

15. Procédé selon l'une quelconque des revendications 1 à 14, dans lequel la deuxième valeur ($\alpha2$) est sélectionnée de manière à rendre le signal de sortie (DN) asymétrique entre une courte distance et une longue distance, pour pouvoir déterminer si l'objet (20) est à une courte ou une longue distance du capteur de proximité (100).

**Fig. 1**

**Fig. 2A**

**Fig. 2B**

**Fig. 3**

**Fig. 4**

S1    ALPHA=1 -SYNC

PSDATA>DETECT

S2    ALPHA1=1 -ASYNC

PSADATA< RELEASE
ALPHA=0.75 -ASYNC

PSDATA>TH1    S3      PSDATA>TH1

PSDATA<TH1
ALPHA=0.75 -ASYNC

S4

410

## Fig. 5A

PSATA vs. Distance

## Fig. 5B

**Fig. 6**

EP 4 567 461 A1

Europäisches
Patentamt

European
Patent Office

Office européen
des brevets

**RAPPORT DE RECHERCHE EUROPEENNE**

Numéro de la demande

EP 24 21 5194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2023/105034 A1 (AMS OSRAM INT GMBH [DE]) 15 juin 2023 (2023-06-15) * le document en entier * ----- | 1-15 | INV. G01S7/481 G01S17/04 G01S7/497 |
| A | US 2020/057158 A1 (CHUA SENG-YEE [SG] ET AL) 20 février 2020 (2020-02-20) * le document en entier * ----- | 1-15 | |
| A | US 2023/175836 A1 (HSU EN-FENG [TW] ET AL) 8 juin 2023 (2023-06-08) * le document en entier * ----- | 1-15 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 4 avril 2025 | Zaneboni, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 21 5194

04-04-2025

| Document brevet cité au rapport de recherche | Date de publication | Membre(s) de la famille de brevet(s) | Date de publication |
|---|---|---|---|
| WO 2023105034 A1 | 15-06-2023 | DE 102021132716 A1 | 15-06-2023 |
| | | DE 112022005899 A5 | 10-10-2024 |
| | | US 2025044418 A1 | 06-02-2025 |
| | | WO 2023105034 A1 | 15-06-2023 |
| US 2020057158 A1 | 20-02-2020 | AUCUN | |
| US 2023175836 A1 | 08-06-2023 | AUCUN | |

EPO FORM P0460